# EUROPÄISCHE PATENTSCHRIFT

(11) **EP 0 996 837 B1**
(45) Veröffentlichungstag und Bekanntmachung des Hinweises auf die Patenterteilung: **21.05.2003**
(21) Anmeldenummer: 98939603.1
(22) Anmeldetag: 02.07.1998
(51) Int. Cl.: F16K 15/02

(54) **VENTIL**
VALVE
SOUPAPE

(30) Priorität: 23.07.1997 DE 19731557
(43) Veröffentlichungstag der Anmeldung: 03.05.2000
(73) Patentinhaber: FILTERWERK MANN + HUMMEL GmbH, 71631 Ludwigsburg (DE)
(72) Erfinder: JAINEK, Herbert, D-74074 Heilbronn (DE); PAVLIN, Jaroslav, D-71691 Freiberg (DE)
(74) Vertreter: Voth, Gerhard, Dipl.-Ing.
(86) Internationale Anmeldenummer: EP9804083
(87) Internationale Veröffentlichungsnummer: WO99005438

(56) Entgegenhaltungen:
- WO-A-96/06233
- DE-A- 1 944 774
- DE-C- 460 840
- FR-A- 758 191
- GB-A- 1 190 465

## Beschreibung

### Stand der Technik

Die Erfindung betrifft ein Ventil nach dem Oberbegriff des Hauptanspruchs.

Bei bekannten Ventilen werden die in der Regel im Bereich des Ventilsitzes kugelförmig verlaufenden Ventilkörper gegen eine korrespondierend konisch gestaltete Ventilplatte gedrückt. Die Herstellung eines dauerhaft dichten Ventilsitzes erfordert hierbei einen großen Herstellungsaufwand.

Aus der WO 96/06233 ist ein Ventil mit einer Ablauffunktion bekannt. Dieses Ventil weist einen Ventilkörper auf, der unter dem Druck einer an einer Ventilkappe anliegenden Ventilfeder an einen Ventilsitz gedrückt ist, wobei das Ventil im Bereich des Ventilsitzes durch ein Umklammerungsteil zusammengehalten ist.

### Aufgabenstellung

Der Erfindung liegt die Aufgabe zugrunde, ein Ventil der eingangs angegebenen Art so fortzubilden, dass ein dichter Einbau und eine dauerhaft gute Dichtwirkung am Ventilsitz auf einfache Weise erreichbar ist.

### Vorteile der Erfindung

Das erfindungsgemäße Ventil weist in vorteilhafter Weise bei einem Ventilkörper, der unter dem Druck einer, an einer Ventilkappe anliegenden Ventilfeder an einen Ventilsitz gedrückt ist, eine Umklammerung für die Ventilplatte auf, die mit einem Elastomer beschichtet ist. Bei einer bevorzugten Ausführungsform ist auch der Ventilsitz selbst unter Weglassung einer separaten Ventilplatte durch die elastomerbeschichtete Umklammerung gebildet.

Auf einfache Weise kann hierbei die Ventilplatte aus einem schon vorher mit dem Elastomer beschichteten Blechteil mit der erforderlichen Materialdicke herausgestanzt werden. Zur Bildung eines kompletten Ventilgehäuses ist die Ventilplatte vorzugsweise derart durch Falzungen an der Ventilkappe gehalten, dass der Ventilkörper unter einer Vorspannung am Ventilsitz anliegt. Es sind somit nur wenige Arbeitsgänge notwendig um ein komplettes funktionsfähiges Ventil herzustellen. Das Elastomer an der Ventilplatte ist ausreichend elastisch um eine dauerhaft gute Dichtwirkung am Ventilsitz zu gewährleisten und geringfügige Fertigungstoleranzen auszugleichen.

### Zeichnung

Ausführungsbeispiele des erfindungsgemäßen Ventils werden anhand der Zeichnung erläutert. Es zeigen:
Figur 1 ein erstes Ausführungsbeispiels eines Ventils mit einer elastomerbeschichteten Umklammerung;
Figur 2 ein zweites Ausführungsbeispiel mit einem zusätzlichen elastomerbeschichteten Ventilsitz und
Figur 3 ein drittes, gegenüber dem Ausführungsbeispiel nach Figur 2 leicht abgewandeltes Ausführungsbeispiel.

### Beschreibung der Ausführungsbeispiele

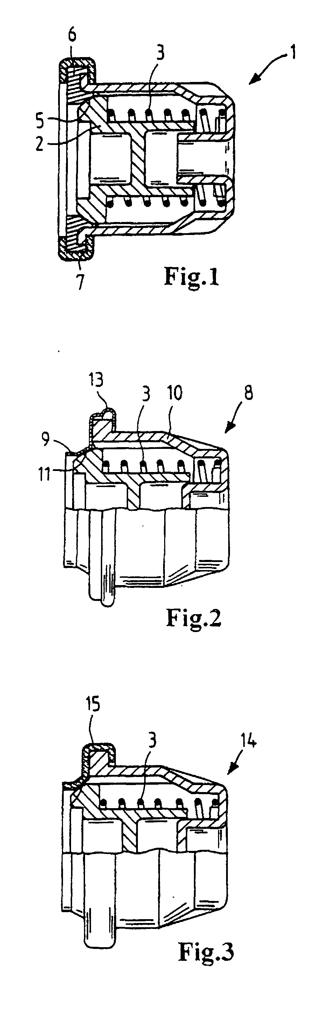

In Figur 1 ist ein Ausführungsbeispiel eines Ventils 1 mit einem Ventilkörper 2 gezeigt, der über eine Ventilfeder 3 an einer Ventilkappe anliegt und in dieser Ventilkappe über den erforderlichen Ventilfederhub gleiten kann.

Der Ventilkörper 2 ist zur Bildung eines Ventilsitzes 5 kugelförmig ausgebildet und liegt hier an einer korrespondierenden Fläche einer Ventilplatte 6 im geschlossenen Zustand dichtend an. Die Ventilplatte 6 wird über ein gefalztes Umklammerungsteil 7 an der Ventilkappe befestigt, wobei bei der Anbringung des Umklammerungsteils 7 die Ventilfeder 3 um einen vorgegebenen Betrag heruntergedrückt wird. Das Umklammerungsteil 7 ist ein innen und außen elastomerbeschichtetes Blechstanzteil, wobei insbesondere bei einem Einbau des Ventils 1 in ein Kunststoffgehäuse eine gute und dauerhafte Abdichtung zum Gehäuse erreichbar ist.

Das Ventil 1 weist somit in seiner Ruhelage aufgrund der Federkraft der Ventilfeder 3 einen geschlossenen Ventilsitz 5 auf. Bei einer Erhöhung des Drucks einer Flüssigkeit, die auf den Ventilkörper 2 im Bereich des Ventilsitzes 5 einwirkt, wird der Ventilkörper 2 gegen die Kraft der Ventilfeder 3 gedrückt und gibt damit den Ventilsitz für einen Durchfluss frei.

In Abweichung von der Figur 1 weist ein Ausführungsbeispiel des Ventils 8 nach Figur 2 ein relativ dünnes Umklammerungsteil 9 auf, 1 das ebenfalls aus einem innen und außen elastomerbeschichteten Blechteil ausgestanzt ist. Das Umklammerungsteil 9 ist analog zum Teil 7 nach der Figur 1 an einer Ventilkappe 10 durch Umfalzung befestigt und bildet gleichzeitig die Ventilplatte. Somit ist das Ventil 8 bereits durch die Befestigung der Ventilkappe 10 voll funktionsfähig. Die Elastomerbeschichtung bewirkt innen eine bessere Dichtwirkung am Ventilsitz 11 und außen eine bessere Dichtheit zum Gehäuse nach der Montage.

Eine zusätzliche Dichtwirkung zwischen dem Ventil 8 und einem Gehäuse kann beim Ausführungsbeispiel nach der Figur 2 durch eine umlaufende Sicke 13 erreicht werden. Insbesondere bei Kunststoffgehäusen weitet sich die Ventileinpassung am Gehäuse durch Wärmeausdehnung auf, so dass hier durch die Federwirkung der Sicke 13 ein Ausgleich geschaffen werden kann.

Bei einem dritten Ausführungsbeispiel des Ventils 14 nach Figur 3 wird in gleicher Weise wie bei Figur 2 ein beidseitig elastomerbeschichtetes Umklammerungsteil 15, hier allerdings mit größerer Dicke, verwendet. Hier kann die erforderliche Federwirkung nach der Montage zum Gehäuse durch eine größere Schichtdicke erreicht werden, so dass auch ev. erforderliche O-Ringe nicht notwendig sind.

### Bezugszeichenliste

- 1 =: Ventil
- 2 =: Ventilkörper
- 3 =: Ventilfeder
- 5 =: Ventilsitz
- 6 =: Ventilplatte
- 7 =: Umklammerungsteil
- 8 =: Ventil
- 9 =: Umklammerungsteil (Ventilplatte)
- 10 =: Ventilkappe
- 11 =: Ventilsitz
- 13 =: umlaufende Sicke
- 14 =: Ventil
- 15 =: Umklammerungsteil (Ventilplatte)

## Patentansprüche

1. Ventil mit
- einem Ventilkörper (2), der unter dem Druck einer an einer Ventilkappe (10) anliegenden Ventilfeder (3) an einen Ventilsitz (5; 11) gedrückt ist, **dadurch gekennzeichnet, dass**
- das Ventil (1) im Bereich des Ventilsitzes (5; 11) durch ein elastomerbeschichtetes Umklammerungsteil (7; 9; 15) zusammengehalten ist, wobei
- das elastomerbeschichtete Umklammerungsteil (7; 9; 15) aus einem Blechteil herausgestanzt ist und derart durch Falzungen an der Ventilkappe (10) gehalten ist, dass der Ventilkörper (2) unter einer Vorspannung am Ventilsitz (5) anliegt.

2. Ventil nach Anspruch 1, **dadurch gekennzeichnet, dass**
- das elastomerbeschichtete Umklammerungsteil (9; 15) die Ventilplatte bildet.

3. Ventil nach einem der vorhergehenden Ansprüche, **dadurch gekennzeichnet, dass**
- das elastomerbeschichtete Umklammerungsteil (9) einen außen umlaufende Sicke aufweist.

## Claims

1. Valve comprising
- a valve body (2) pushed against a valve seat (5; 11) under the pressure of a valve spring (3) applied against a valve cap (10), **characterized in that**
- the valve (1) is hold together in the area of the valve seat (5;11) by means of an elastomer coated clamp part (7; 9; 15), whereby
- the elastomer coated clamp part (7; 9; 15) is punched out of a sheet metal part and is hold by means of folds in such a way on the valve cap (10) that the valve body (2) is applied under prestress against the valve seat (5) .

2. Valve according to claim 1, **characterized in that**
- the elastomer coated clamp part (9; 15) builds the valve plate.

3. Valve according to one of the preceding claims, **characterized in that**
- the elastomer coated clamp part (9; 15) comprises an external circonferential ridge .

## Revendications

1. Valve avec :
- un corps de valve (2) poussé contre un siège de valve (5; 11) sous la pression d'un ressort de valve (3) appliqué contre un couvercle de valve (10) **caractérisé en ce que**
- la valve est maintenue dans la zone du siège de valve (5; 11) par une pièce de serrage (7; 9; 15) recouverte par un élastomère, où
- la pièce de serrage (7; 9; 15) recouverte par un élastomère est découpée dans une pièce de tôle et est maintenue au moyen de pliages de manière telle sur le couvercle de valve (10) à ce que le corps de valve (2) s'applique de façon précontrainte sur le siège de valve (5).

2. Valve selon la revendication 1, **caractérisé en ce que**
- la pièce de serrage (9, 15) recouverte par un élastomère forme le clapet de valve.

3. Valve selon une des revendications précédentes, **caractérisé en ce que**
- la pièce de serrage (9) recouverte par un élastomère comporte à l'extérieur une nervure circonférentielle.
